(19)

**Europäisches Patentamt**
**European Patent Office**
**Office européen des brevets**

(11) **EP 4 761 229 A1**

(12) **EUROPEAN PATENT APPLICATION**
published in accordance with Art. 153(4) EPC

(43) Date of publication:
**17.06.2026 Bulletin 2026/25**

(51) International Patent Classification (IPC):
***H04N 1/46*** *(2006.01)* ***G06T 1/00*** *(2006.01)*

(21) Application number: **24859850.0**

(22) Date of filing: **28.08.2024**

(52) Cooperative Patent Classification (CPC):
**G01J 3/46; G06T 1/00; H04N 1/46; H04N 1/54**

(86) International application number:
**PCT/JP2024/030786**

(87) International publication number:
**WO 2025/047820 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.08.2023 PCT/JP2023/031610**

(71) Applicant: **Resonac Corporation**
**Tokyo 105-7325 (JP)**

(72) Inventors:
• **SAKAGUCHI, Suguru**
**Tokyo 105-7325 (JP)**
• **TOMITA, Miyuki**
**Tokyo 105-7325 (JP)**

(74) Representative: **Strehl & Partner mbB**
**Maximilianstrasse 54**
**80538 München (DE)**

(54) **INFORMATION PRESENTATION SYSTEM, INFORMATION PRESENTATION PROGRAM, AND INFORMATION PRESENTATION METHOD**

(57) An information presentation system 1 includes: an acquisition unit configured to acquire information of a reference spectrum of a reference coloring material serving as a reference; a calculation unit configured to calculate, based on the reference spectrum, a corresponding spectrum for causing a subject to produce a response that matches or approximates a response from a color vision system of a reference observer who has visually recognized the reference coloring material; a storage unit configured to store information of a plurality of raw material spectra corresponding to each of a plurality of raw coloring materials to be mixed; a selection unit configured to use the information of the corresponding spectrum and the information of the plurality of raw material spectra to select a plurality of mixed materials from among the plurality of raw coloring materials, the plurality of mixed materials emitting a spectrum that matches or approximates the corresponding spectrum when mixed; and a presentation unit configured to present information identifying the plurality of mixed materials.

Fig.1

EP 4 761 229 A1

## Description

## Technical Field

An aspect of the present disclosure relates to an information presentation system, an information presentation program, and an information presentation method.

## Background Art

Color processing that takes into account people with color vision deficiency has been known in the related art. For example, a color processing apparatus described in Patent Literature 1 acquires a color value to be subjected to color processing, calculates a color vision degree coefficient representing a degree of color vision deficiency based on a distribution of the number of people in examination results obtained by a color vision examination conducted on a predetermined group, calculates a color conversion coefficient used for converting the acquired color value based on a correspondence between the color vision degree coefficient and sensitivity characteristics of L cones, M cones, and S cones, and performs color conversion processing on the color value using the color conversion coefficient.

## Citation List

## Patent Literature

[Patent Literature 1] Japanese Patent No. 5924289

## Summary of Invention

## Technical Problem

There is a demand for a mechanism for providing manufacturing information for manufacturing a coloring material for providing colors in consideration of color vision diversity.

## Solution to Problem

An information presentation system according to an aspect of the present disclosure includes: an acquisition unit configured to acquire information of a reference spectrum of a reference coloring material serving as a reference; a calculation unit configured to calculate, based on the reference spectrum, a corresponding spectrum for causing a subject to produce a response that matches or approximates a response from a color vision system of a reference observer who has visually recognized the reference coloring material; a storage unit configured to store information of a plurality of raw material spectra corresponding to each of a plurality of raw coloring materials to be mixed; a selection unit configured to select, from the plurality of raw coloring materials, a plurality of mixed materials that emit a spectrum that matches or approximates the corresponding spectrum when mixed, using the information of the corresponding spectrum and the information of the plurality of raw material spectra; and a presentation unit configured to present information identifying the plurality of mixed materials.

An information presentation program according to an aspect of the present disclosure causes a computer to execute: an acquisition step of acquiring information of a reference spectrum of a reference coloring material that serves as a reference; a calculation step of calculating, based on the reference spectrum, a corresponding spectrum for causing a subject to produce a response that matches or approximates a response from a color vision system of a reference observer who has visually recognized the reference coloring material; a storage step of storing information of a plurality of raw material spectra corresponding to each of a plurality of raw coloring materials to be mixed; a selection step of selecting, from the plurality of raw coloring materials, a plurality of mixed materials that emit a spectrum that matches or approximates the corresponding spectrum when mixed, using the information of the corresponding spectrum and the information of the plurality of raw material spectra; and a presentation step of presenting information identifying the plurality of mixed materials.

An information presentation method according to an aspect of the present disclosure includes: an acquisition step of acquiring information of a reference spectrum of a reference coloring material that serves as a reference; a calculation step of calculating, based on the reference spectrum, a corresponding spectrum for causing a subject to produce a response that matches or approximates a response from a color vision system of a reference observer who has visually recognized the reference coloring material; a storage step of storing information of a plurality of raw material spectra corresponding to each of a plurality of raw coloring materials to be mixed; a selection step of selecting, from the plurality of raw coloring materials, a plurality of mixed materials that emit a spectrum that matches or approximates the corresponding spectrum when mixed, using the information of the corresponding spectrum and the information of the plurality of raw material spectra; and a presentation step of presenting information identifying the plurality of mixed materials.

In these aspects, a corresponding spectrum is calculated that enables a subject to perceive the color of a reference coloring material in the same manner as a reference observer, and based on this corresponding spectrum, a plurality of mixed materials that realize a material emitting a spectrum that matches or approximates the corresponding spectrum can be selected from a plurality of raw coloring materials, and information on the plurality of mixed materials is presented. This makes it possible to provide manufacturing information for manufacturing a coloring material for providing colors in consideration of color vision diversity.

**Advantageous Effects of Inventions**

According to an aspect of the present disclosure, it is possible to provide manufacturing information for manufacturing a coloring material for providing colors in consideration of color vision diversity.

**Brief Description of Drawings**

FIG. 1 is a diagram illustrating an example of a functional configuration of an information presentation system.
FIG. 2 is a graph illustrating an example of sensitivity characteristics of L cones, M cones, and S cones.
FIG. 3 is a diagram illustrating a relationship between a reference spectrum and a corresponding spectrum.
FIG. 4 is a flowchart illustrating an example of an operation of a color generation system.

**Description of Embodiments**

Hereinafter, embodiments of the present disclosure will be described in detail with reference to the accompanying drawings. In the description of the drawings, the same or equivalent elements are denoted by the same reference signs, and redundant description is omitted.

[Outline of System]

The information presentation system according to the present disclosure is a computer system or a control system that provides manufacturing information for manufacturing a coloring material for providing colors in consideration of color vision diversity. Color vision diversity refers to a situation in which the recognition or identification of colors differs among people. The information presentation system may be used for the purpose of creating a common understanding of colors among people with different color visions, or promoting mutual understanding regarding the recognition or identification of colors. The coloring material is a material that produces coloration with various spectral distributions in the visible region, and is a material such as a dye, a pigment, a colorant, or a light emitter.

As types of color vision, there are five types: C-type (Common), **P**-type (Protanope), D-type (Deuteranope), T-type (Tritanope), and A-type (Achromatic).

The C-type is a group having three types of cones: L cones, M cones, and S cones. The L cone is a photoreceptor cell that reacts with high sensitivity to light near long wavelengths, such as red. The M cone is a photoreceptor cell that reacts with high sensitivity to light near medium wavelengths, such as green. The S cone is a photoreceptor cell that reacts with high sensitivity to light near short wavelengths, such as blue. **In** the case of Japanese people, 95% of males and 99% of females belong to the C-type. People of the C-type are also referred to as people with normal color vision.

On the other hand, people of the P-type, D-type, T-type, and A-type are also referred to as people with color vision deficiency. The P-type is a group composed of P-type strong (Protanopia), which lacks L cones, and **P**-type weak (Protanomaly), in which the sensitivity of the L cones is shifted to resemble the sensitivity of the M cones. The D-type is a group composed of D-type strong (Deuteranopia), which lacks M cones, and D-type weak (Deuteranomaly), in which the sensitivity of the M cones is shifted to resemble the sensitivity of the L cones. The T-type is a group that lacks S cones. The A-type is a group that has only one type of cone or no cones at all. Among people with color vision deficiency, the P-type and D-type account for the majority, and the proportions of the T-type and A-type are extremely small.

As an example of promoting the aforementioned common understanding or mutual understanding, the information presentation system may be used to manufacture a coloring material for allowing a person with color vision deficiency to experience a color recognized by a person with normal color vision, or to manufacture a coloring material for realizing the reverse. Alternatively, the information presentation system can be used to manufacture a coloring material that provides a color that is recognized in the same way by both people with normal color vision and people with color vision deficiency. The information presentation system may be used for the purpose of manufacturing a coloring material for promoting common understanding or mutual understanding of colors among people of the C-type, P-type, D-type, T-type, and A-type.

The information presentation system generates a corresponding color, which is another color that takes color vision diversity into account, based on a reference color of a reference coloring material that serves as a reference, and presents information for manufacturing a coloring material that provides the corresponding color. The reference color is a color designated to generate the corresponding color. The corresponding color can be said to be a color corresponding to the reference color. In one example, the information presentation system generates a corresponding spectrum, which is a spectrum of the corresponding color, based on a reference spectrum, which is a spectrum of the reference color.

[Configuration of System]

The information presentation system is composed of one or more computers. **In** the present embodiment, the information presentation system 1 is configured to include a color conversion system 10, which is one computer, and a material selection system 20, which is one computer. However, the information presentation system 1 may include three or more computers, or may be composed of only one computer. When a plurality of computers are used, these computers are connected via a communication network such as the Internet or an intranet, whereby one information presentation system is logically constructed.

A computer constituting the information presentation system generally includes, as hardware devices, a processor, a memory, a communication interface, an input device, and an output device. Examples of the processor include a CPU and a GPU. The memory can be composed of a flash memory, a hard disk, or the like. The communication interface can be composed of a network card or a wireless communication module. Examples of the input device include a keyboard, a pointing device, a touch panel, a microphone, a sensor, and a camera. Examples of the output device include a monitor, a touch panel, a head-mounted display (HMD), and a speaker.

An information presentation program for causing a computer to function as the information presentation system includes program code for realizing each functional module of the information presentation system. This information presentation program may be provided, for example, by being non-transitorily recorded on a tangible recording medium such as a CD-ROM, a DVD-ROM, or a semiconductor memory. Alternatively, the information presentation program may be provided as a data signal superimposed on a carrier wave via a communication network. The provided information presentation program is recorded, for example, in a memory.

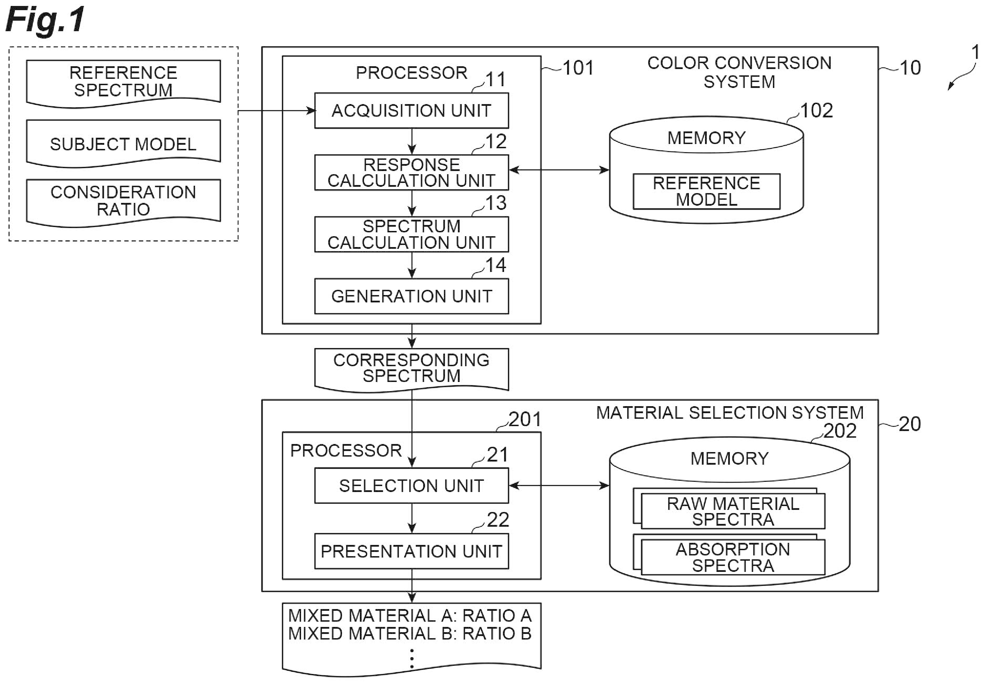

A configuration of an information presentation system 1 according to an example will be described with reference to FIG. 1. FIG. 1 is a diagram illustrating a functional configuration of the information presentation system 1. The information presentation system 1 includes a color conversion system 10 and a material selection system 20.

The color conversion system 10 is a computer system that generates a corresponding spectrum based on a reference spectrum. The color conversion system 10 is configured by one computer or a plurality of computers connected to each other by a communication network. The color conversion system 10 includes a processor 101 and a memory 102. In one example, the processor 101 functions as an acquisition unit 11, a response calculation unit 12, a spectrum calculation unit 13, and a generation unit 14. The memory 102 stores in advance a predetermined reference model, which is data indicating a color vision system of a reference observer. At least one of a person with normal color vision or a person with color vision deficiency is assumed as the reference observer. The reference model may be prepared for each of the person with normal color vision and the person with color vision deficiency. When a person with color vision deficiency is assumed as the reference observer, the reference model may be prepared for each type of color vision, and for example, a P-type reference model and a D-type reference model may be prepared.

The acquisition unit 11 is a functional module that acquires input data (information) indicating a reference spectrum, a subject model, and a consideration ratio. The subject model is data indicating the color vision system of the subject. The reference spectrum is a spectrum related to a reference color emitted by a reference coloring material that serves as a reference. The subject refers to a person assumed as a target to whom a corresponding color is provided. The subject may be a person with normal color vision or a person with a specific type of color vision deficiency such as P-type or D-type. The consideration ratio is an index indicating the degree of change from the reference color to the corresponding color.

The response calculation unit 12 is a functional module that calculates a response from the color vision system of a person who has visually recognized the reference color as a reference response. The response calculation unit 12 calculates the reference response based on the reference spectrum and the reference model. The response corresponds to an electrical signal transmitted from the L cones, M cones, and S cones to the brain through the optic nerve.

The spectrum calculation unit 13 is a functional module that calculates a conversion spectrum for causing the subject model to output a response that matches or approximates the reference response. "A response that matches or approximates the reference response" refers to a response in which the difference from the reference response is equal to or less than a predetermined threshold.

The generation unit 14 is a functional module that generates a corresponding spectrum based on at least the conversion spectrum. In one example, the generation unit 14 generates the corresponding spectrum based on the reference spectrum, the conversion spectrum, and the consideration ratio. The corresponding spectrum is a spectrum that causes a subject to produce a response that matches or approximates the reference response of a reference observer who has visually recognized the reference coloring material.

The above-described response calculation unit 12, spectrum calculation unit 13, and generation unit 14 correspond to a calculation unit that calculates the corresponding spectrum based on the reference spectrum.

The material selection system 20 is a computer system that presents information on a plurality of mixed materials that serve as materials for manufacturing a coloring material that provides a corresponding color based on the corresponding spectrum. The material selection system 20 is configured by one computer or a plurality of computers connected to each other by a communication network. The material selection system 20 includes a processor 201 and a memory 202. In one example, the processor 201 functions as a selection unit 21 and a presentation unit 22. The memory 202 stores in advance data indicating a plurality of raw material spectra, which are coloring characteristics corresponding to each of a plurality of raw coloring materials to be mixed, and data of a plurality of absorption spectra, which are color absorption characteristics corresponding to each of a plurality of wavelength absorbing materials to be mixed. The raw coloring material is a material that serves as a raw material for the coloring material, and is a material such as a dye, a pigment, a colorant, a phosphor, or a phosphorescent material. Examples of the raw coloring material include azo dyes. The wavelength absorbing material is a material that absorbs a specific wavelength when mixed with the raw coloring material.

The coloring material made from a plurality of mixed materials may be a light emitter. The light emitter is a member that emits light by excitation energy (electrical energy, chemical energy, light energy, etc.). The light emitter is a member manufactured to have a plurality of selected mixed materials at a plurality of mixing ratios, based on information presented by the material selection system 20. Phosphors of each color, which are a plurality of mixed materials prepared for manufacturing the light emitter, can be manufactured, for example, by a method disclosed as Example 1 in Japanese Unexamined Patent Publication No. 2009-161372. The quantum dots (quantum dot phosphors) disclosed in this document have a sharp emission spectrum with a full width at half maximum (FWHM) of about 30 nm. The light emitter manufactured in this way has a corresponding spectrum based on the reference spectrum and contributes to color expression that takes color vision diversity into account.

The light emitter as a coloring material may be used to manufacture various articles. The light emitter may be a phosphor or may be manufactured from a phosphorescent material. The light emitter may be used, for example, in a display, a traffic light, lighting, a wavelength conversion film, a backlight, an indicator, a luminescent dye, a luminescent paint, or a luminescent ink. Through articles using the light emitter, it is possible to create a common understanding of colors between people with normal color vision and people with color vision deficiency, or to promote mutual understanding regarding the recognition or identification of colors. It also becomes possible to provide people with color vision deficiency with opportunities to enjoy using articles in the same way as people with normal color vision. Alternatively, articles using the light emitter can also be expected to give people with color vision deficiency confidence in color selection and to reduce mistakes in color selection.

In one example, the raw material spectrum is represented by the reflectance (%) at each wavelength (nm) in the visible light region. The raw material spectrum may be expressed by a spectral function indicating the relationship between wavelength and reflectance. In one example, the absorption spectrum is represented by the absorbance at each wavelength (nm) in the visible light region. The absorption spectrum may be expressed by a spectral function indicating the relationship between wavelength and absorbance.

The selection unit 21 selects a plurality of mixed materials from among the plurality of raw coloring materials and the plurality of wavelength absorbing materials, using the data of the corresponding spectrum, the data of the plurality of raw material spectra, and the data of the plurality of absorption spectra. At this time, the selection unit 21 also calculates the mixing ratios of the plurality of mixed materials.

The presentation unit 22 presents information on the plurality of mixed materials selected by the selection unit 21 and information on their mixing ratios calculated by the selection unit 21. For example, the presentation unit 22 presents one mixed material "mixed material A" in association with the mixing ratio "ratio A" of that material, and also presents another mixed material "mixed material B" in association with the mixing ratio "ratio B" of that material. The presentation of information by the presentation unit 22 may be performed using an output device of a computer constituting the material selection system 20, or may be performed by being transmitted from the computer constituting the material selection system 20 to an external device via a communication interface.

[Color Vision Model]

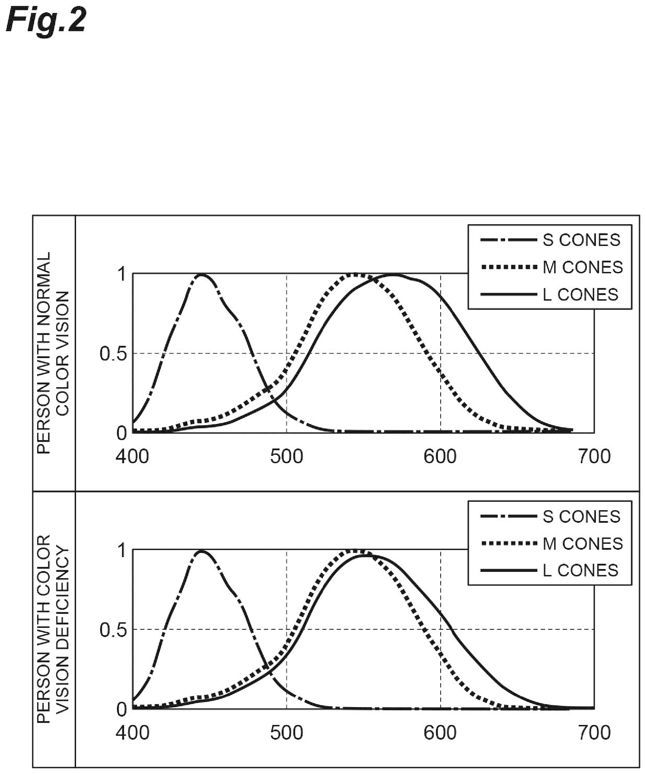

Both the reference model and the subject model can be said to be color vision models indicating a human color vision system. In one example, the color vision model indicates the respective sensitivity characteristics of the L cones, M cones, and S cones. The sensitivity characteristics are also referred to as spectral characteristics. FIG. 2 is a graph illustrating an example of the sensitivity characteristics of each cone for a person with normal color vision and a person with color vision deficiency. The horizontal axis and the vertical axis of the graph indicate wavelength (nm) and relative sensitivity, respectively. The person with color vision deficiency shown in FIG. 2 corresponds to P-type weak (Protanomaly). That person with color vision deficiency has a greater degree of overlap in the sensitivity characteristics of the M cones and L cones compared to a person with normal color vision (C-type). Such a difference in sensitivity characteristics causes a difference in the recognition or identification of colors.

[Spectrum]

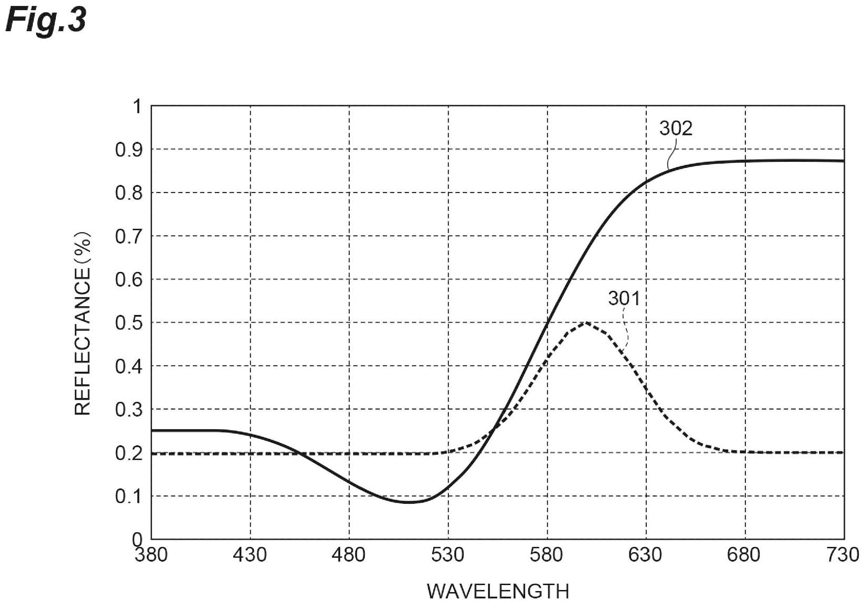

FIG. 3 is a graph illustrating an example of a reference spectrum processed by the color conversion system 10 and a corresponding spectrum generated corresponding thereto. The horizontal axis and the vertical axis of the graph indicate wavelength (nm) and reflectance (%), respectively. Here, an example is shown in which a model of a person with normal color vision is used as the reference model, data of a person with P-type weak color vision deficiency is used as the subject model, and a corresponding spectrum is generated with a consideration ratio of 100%. When a spectrum having a peak at about 600 nm is processed as the reference spectrum 301, a spectrum is generated as the corresponding spectrum 302 that has a trough at about 510 nm and has flat characteristics in a wavelength region of 630 nm or more.

[Operation of System]

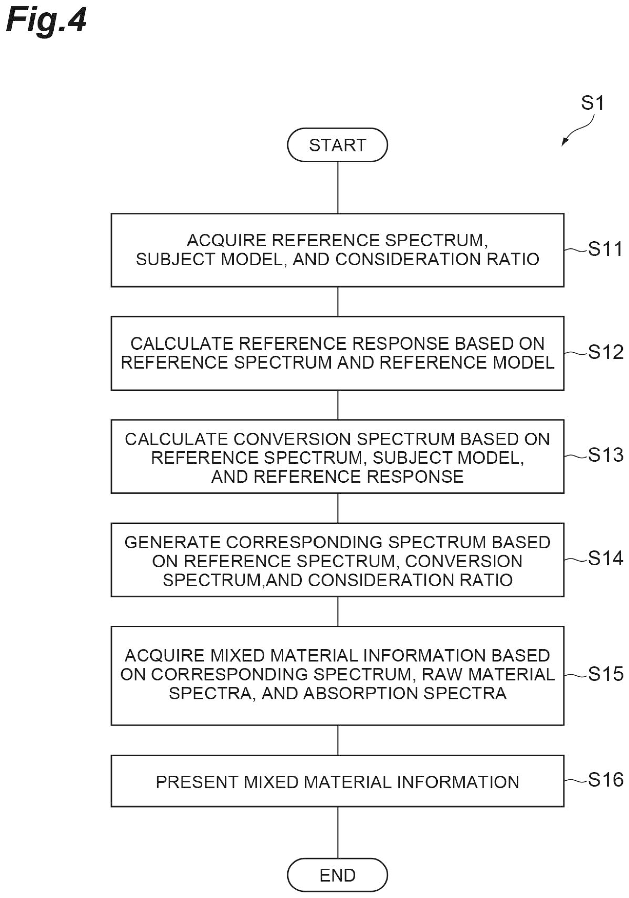

An information presentation method executed by the information presentation system 1 will be described with reference to FIG. 4. FIG. 4 is a flowchart illustrating an example of the operation of the information presentation system 1 as a processing flow S1.

In step S11, the acquisition unit 11 acquires a reference spectrum, a subject model, and a consideration ratio. In one example, a user of the color conversion system 10 inputs a reference color of a reference coloring material, a type of color vision of a subject, and a consideration ratio. The acquisition unit 11 receives the input and reads out a reference spectrum corresponding to the reference color and a subject model corresponding to the type of color vision from a predetermined storage device. Alternatively, the acquisition unit 11 may receive inputs of the reference spectrum, the subject model, and the consideration ratio. Alternatively, the acquisition unit 11 may receive these data from another computer.

In one example, the reference spectrum is represented by the reflectance (%) at each wavelength (nm) in the visible light region. The reference spectrum may be expressed by a spectral function indicating the relationship between wavelength and reflectance.

In one example, the subject model indicates the respective sensitivity characteristics of the L cones, M cones, and S cones as shown in FIG. 2. The subject model may be expressed by a sensitivity function indicating the relationship between wavelength and relative sensitivity. This sensitivity function can be prepared for each of the L cones, M cones, and S cones. As described above, the subject model indicates the color vision system (color vision model) of either a person with normal color vision or a person with color vision deficiency.

In one example, the consideration ratio is represented by a numerical value greater than 0% and less than or equal to 100%. When the consideration ratio is 0%, the corresponding color is the same as the reference color. When the consideration ratio is 100%, the color recognized by the subject who views the corresponding color matches or approximates the color recognized by the reference observer who views the reference color. That is, when the consideration ratio is 100%, the situation where the reference observer views the reference color can be experienced by the subject through the corresponding color. When the consideration ratio is a specific numerical value or in a numerical range, the color perceived by the subject viewing the corresponding color and the color perceived by the reference observer may match or substantially match. Such a consideration ratio may be, for example, 20% or a value close thereto.

In one example, the acquisition unit 11 changes at least a part of the reference spectrum without changing the RGB of the reference color. The acquisition unit 11 may acquire the changed spectrum as the final reference spectrum. Correspondingly, the acquisition unit 11 may update the consideration ratio in consideration of the degree of the change, and acquire the updated consideration ratio as the final consideration ratio.

In step S12, the response calculation unit 12 calculates a reference response based on the reference spectrum and the reference model. The reference response may be defined by a response $\alpha$ from the L cones, a response $\beta$ from the M cones, and a response $\gamma$ from the S cones, and in the present disclosure, this reference response is expressed as $(\alpha, \beta, \gamma)$.

In one example, the response calculation unit 12 calculates the response from each of the L cones, M cones, and S cones of the reference observer sensing the reference color as follows. The response calculation unit 12 calculates the product of the relative sensitivity of the cone and the reflectance indicated by the reference spectrum at each wavelength within the visible light region. This product can be said to indicate the degree of excitation. The response calculation unit 12 obtains the sum of the products at individual wavelengths as the response from each cone.

Let x represent the wavelength, let $f_L(x)$, $f_M(x)$, and $f_S(x)$ represent the sensitivity functions of the L cones, M cones, and S cones, respectively, and let $g(x)$ represent the spectral function of the reference color. In this case, the responses $\alpha$, $\beta$, and $\gamma$ can be expressed as in equations (1) to (3), respectively.

$$\alpha = \int f_L(x)g(x)dx \ ... \ (1)$$

$$\beta = \int f_M(x)g(x)dx \ ... \ (2)$$

$$\gamma = \int f_S(x)g(x)dx \ ... \ (3)$$

That is, the response calculation unit 12 can calculate the integral of the product of the sensitivity function and the spectral function for each cone as the reference response $(\alpha, \beta, \gamma)$.

In step S13, the spectrum calculation unit 13 calculates a conversion spectrum based on the reference spectrum, the subject model, and the reference response. In one example, the spectrum calculation unit 13 generates a candidate spectrum by changing at least a part of the reference spectrum. Then, the spectrum calculation unit 13 inputs the candidate spectrum to the subject model and calculates a response from the color vision system of the subject who has visually recognized the color indicated by the candidate spectrum as a subject response $(\alpha', \beta', \gamma')$. The spectrum calculation unit 13 determines whether the subject response $(\alpha', \beta', \gamma')$ matches or approximates the reference response $(\alpha, \beta, \gamma)$. The spectrum calculation unit 13 searches for a subject response $(\alpha', \beta', \gamma')$ that matches or approximates the reference response $(\alpha, \beta, \gamma)$ while changing at least a part of the reference spectrum, and finally specifies the conversion spectrum. The conversion spectrum can also be said to be the corresponding color when the consideration ratio is 100%.

In step S14, the generation unit 14 generates a corresponding spectrum based on the reference spectrum, the conversion spectrum, and the consideration ratio. In one example, the generation unit 14 synthesizes the reference spectrum and the conversion spectrum by linear combination based on the consideration ratio to generate the corresponding spectrum. If the reference spectrum, the conversion spectrum, and the consideration ratio are represented as $S_d$, $S_v$, and r, respectively, the corresponding spectrum $S_c$ is represented by equation (4). r is greater than 0 and less than or equal to 1. When r=1, that is, when the consideration ratio is 100%, the generation unit 14 sets the conversion spectrum as the corresponding spectrum as is.

$$S_c=(1\text{-}r)\cdot S_d+r\cdot S_v \ ... \ (4)$$

In step S15, the selection unit 21 acquires mixed material information regarding a plurality of mixed materials for manufacturing a coloring material having a coloration corresponding to the corresponding spectrum. In one example, the selection unit 21 refers to the corresponding spectrum, a plurality of raw material spectra corresponding to a plurality of raw coloring materials, and a plurality of absorption spectra corresponding to a plurality of wavelength absorbing materials, and selects a plurality of mixed materials for manufacturing the coloring material by mixing from among a plurality of pre-assumed raw coloring materials and a plurality of wavelength absorbing materials.

More specifically, the selection unit 21 weights and superimposes an arbitrary number of raw material spectra from the plurality of raw material spectra and an arbitrary number of absorption spectra from the plurality of absorption spectra to calculate a superimposed spectrum, and determines whether the superimposed spectrum matches or approximates the corresponding spectrum. Then, when the selection unit 21 determines that the superimposed spectrum matches or approximates the corresponding spectrum, it selects the raw coloring materials and wavelength absorbing materials corresponding to each of the plurality of spectra that were superimposed to create the superimposed spectrum, as a plurality of mixed materials. Furthermore, the selection unit uses the weighting of each spectrum used in the calculation of the superimposed spectrum to determine the mixing ratio of the mixed material corresponding to each spectrum. In this way, the selection unit 21 acquires information on the plurality of mixed materials and information on the mixing ratios corresponding to them as mixed material information.

In step S16, the presentation unit 22 presents the mixed material information acquired by the selection unit 21. As one example, the presentation unit 22 presents one mixed material "mixed material A" in association with the mixing ratio "ratio A" of that material, and presents another mixed material "mixed material B" in association with the mixing ratio "ratio B" of that material.

According to the information presentation system 1 described above, a corresponding spectrum is calculated that enables a subject to perceive the color of a reference coloring material in the same manner as a reference observer, and based on this corresponding spectrum, a plurality of mixed materials that realize a material emitting a spectrum that matches or approximates the corresponding spectrum can be selected from a plurality of raw coloring materials, and information on the plurality of mixed materials is presented. This makes it possible to provide manufacturing information for manufacturing a coloring material for providing colors in consideration of color vision diversity.

In addition, a plurality of mixed materials that realize a material emitting a spectrum that matches or approximates the corresponding spectrum can be selected not only from a plurality of raw coloring materials but also from wavelength absorbing materials, and information on the plurality of mixed materials is presented. This increases the degree of freedom of manufacturing information when manufacturing a coloring material for providing colors in consideration of color vision diversity.

In addition, a desired corresponding spectrum can be calculated by using the consideration ratio. As a result, for example, it is possible to provide manufacturing information for a coloring material that is recognized in the same way by both people with normal color vision and people with color vision deficiency.

In addition, since information regarding the mixing ratios of a plurality of mixed materials when manufacturing a material that emits a spectrum that matches or approximates the corresponding spectrum is also presented, it becomes possible to provide accurate manufacturing information when manufacturing a coloring material for providing colors in consideration of color vision diversity.

[Modification Examples]

The technology according to the present disclosure has been described in detail above based on its various examples. However, the present disclosure is not limited to the above examples. The technology according to the present disclosure can be variously modified without departing from the spirit and scope thereof.

In the above example, the color conversion system 10 generates the corresponding spectrum based on the consideration ratio. However, when the color conversion system 10 sets the conversion spectrum as the corresponding spectrum as is, that is, when generating a corresponding spectrum with a consideration ratio of 100%, the color conversion system 10 does not need to acquire and use the consideration ratio.

The processing procedure of the method executed by at least one processor is not limited to the above example. For example, a part of the above-described steps may be omitted, or each step may be executed in a different order. In addition, any two or more of the above-described steps may be combined, or a part of the steps may be modified or deleted. Alternatively, other steps may be executed in addition to the above-described steps.

In the comparison of the magnitude relationship between two numerical values in the present disclosure, either of the two criteria "greater than or equal to" and "greater than" may be used, and either of the two criteria "less than or equal to" and "less than" may be used.

In the present disclosure, the expression "at least one processor executes a first process, executes a second process, ... and executes an n-th process," or an expression corresponding thereto, indicates a concept that includes a case where the execution actor of the n processes from the first process to the n-th process, that is, the processor, changes midway. That is, this expression indicates a concept that includes both a case where all of the n processes are executed by the same processor and a case where the processor changes according to an arbitrary policy in the n processes.

Articles in which the coloring material according to the present disclosure is used are classified into various categories. The categories include, for example, food, clothing, and housing; apparel/fashion; school/children; brand/advertising; toys; and others. Specific examples of articles included in these categories are as follows. Articles related to food, clothing, and housing are, for example, clothes, food products including colorants, tableware, tablecloths, wallpaper, furniture, bedding, and the like. Articles related to food, clothing, and housing may be a combination of wallpaper, furniture, bedding, and the like with lighting. Articles related to apparel/fashion are, for example, umbrellas, hats, hairpins, hair ties, headbands, hair bands, glasses, sunglasses, earrings, piercings, earphones, cosmetics, articles related to nail art (manicures, gels, stickers, etc.), necklaces, neckties, scarves, mufflers, shawls, tie pins, inner tops, outer tops, inner bottoms, outer bottoms, gloves, wristbands, bracelets, watches, smartwatches, rings, smartphone cases, bags, belts, socks, leggings, tights, stockings, anklets, shoes, sandals, geta, slippers, hand fans, folding fans, handkerchiefs, towels, and the like. Articles related to school/children are, for example, stationery, notebooks, letter sets, tool cases, school bags, textbooks/teaching materials, uniforms, gym clothes, indoor shoes, paint sets, lunch boxes, crayons, sticky notes, files, binders, and the like. Articles related to brand/advertising are, for example, articles to which a logo is applied, signboards, advertising materials, packaging (beverages, confectionery, book covers, CD jackets), and the like. Articles related to toys are, for example, stuffed animals/dolls, play-house items, clay, and the like. Other articles are, for example, candles, soaps, business cards, and the like. As described above, the articles according to the present disclosure are diverse, and specific articles are included in each category. This makes it possible to cater to various uses or circumstances.

[Appendix]

As understood from the various examples above, the present disclosure includes the aspects shown below.

(Appendix 1)

An information presentation system, comprising:

an acquisition unit configured to acquire information of a reference spectrum of a reference coloring material serving as a reference;
a calculation unit configured to calculate, based on the reference spectrum, a corresponding spectrum for causing a subject to produce a response that matches or approximates a response from a color vision system of a reference observer who has visually recognized the reference coloring material;
a storage unit configured to store information of a plurality of raw material spectra corresponding to each of a plurality of raw coloring materials to be mixed;
a selection unit configured to use the information of the corresponding spectrum and the information of the plurality of raw material spectra to select a plurality of mixed materials from among the plurality of raw coloring materials, the plurality of mixed materials emitting a spectrum that matches or approximates the corresponding spectrum when mixed; and
a presentation unit configured to present information identifying the plurality of mixed materials.

(Appendix 2)

The information presentation system according to Appendix 1,

wherein the storage unit further stores information of an absorption spectrum that is an absorption characteristic of a color corresponding to one or more wavelength absorbing materials to be mixed, and the selection unit further uses the information of the absorption spectrum to select the plurality of mixed materials from among the plurality of raw coloring materials and the one or more wavelength absorbing materials.

(Appendix 3)

The information presentation system according to Appendix 1 or 2,

wherein the acquisition unit further acquires a consideration ratio indicating a degree of change from the reference spectrum to the corresponding spectrum, and
the calculation unit calculates the corresponding spectrum based on the reference spectrum and the consideration ratio.

(Appendix 4)

The information presentation system according to any one of Appendices 1 to 3,

wherein the selection unit calculates a mixing ratio of the plurality of mixed materials emitting a spectrum that matches or approximates the reference spectrum when mixed, and
the presentation unit further presents information of the mixing ratio.

(Appendix 5)

An information presentation program that causes a computer to execute:

an acquisition step of acquiring information of a reference spectrum of a reference coloring material serving as a reference;
a calculation step of calculating, based on the reference spectrum, a corresponding spectrum for causing a subject to produce a response that matches or approximates a response from a color vision system of a reference observer who has visually recognized the reference coloring material;
a storage step of storing information of a plurality of raw material spectra corresponding to each of a plurality of raw coloring materials to be mixed;
a selection step of using the information of the corresponding spectrum and the information of the plurality of raw material spectra to select a plurality of mixed materials from among the plurality of raw coloring materials, the plurality of mixed materials emitting a spectrum that matches or approximates the corresponding spectrum when mixed; and
a presentation step of presenting information identifying the plurality of mixed materials.

(Appendix 6)

An information presentation method, comprising:

an acquisition step of acquiring information of a reference spectrum of a reference coloring material serving as a reference;
a calculation step of calculating, based on the reference spectrum, a corresponding spectrum for causing a subject to produce a response that matches or approximates a response from a color vision system of a reference observer who has visually recognized the reference coloring material;
a storage step of storing information of a plurality of raw material spectra corresponding to each of a plurality of raw coloring materials to be mixed;
a selection step of using the information of the corresponding spectrum and the information of the plurality of raw material spectra to select a plurality of mixed materials from among the plurality of raw coloring materials, the plurality of mixed materials emitting a spectrum that matches or approximates the corresponding spectrum when mixed; and
a presentation step of presenting information identifying the plurality of mixed materials.

According to Appendices 1, 5, and 6, a corresponding spectrum is calculated that enables a subject to perceive the color of a reference coloring material in the same manner as a reference observer, and based on this corresponding spectrum, a plurality of mixed materials that realize a material emitting a spectrum that matches or approximates the corresponding spectrum can be selected from a plurality of raw coloring materials, and information on the plurality of mixed materials is presented. This makes it possible to provide manufacturing information for manufacturing a coloring material for providing colors in consideration of color vision diversity.

According to Appendix 2, a plurality of mixed materials that realize a material emitting a spectrum that matches or approximates the corresponding spectrum can be selected not only from a plurality of raw coloring materials but also from wavelength absorbing materials, and information on the plurality of mixed materials is presented. This increases the degree of freedom of manufacturing information when manufacturing a coloring material for providing colors in consideration of color vision diversity.

According to Appendix 3, a desired corresponding spectrum can be calculated by using the consideration ratio. As a result, for example, it is possible to provide manufacturing information for a coloring material that is recognized in the same way by both people with normal color vision and people with color vision deficiency.

According to Appendix 4, since information regarding the mixing ratios of a plurality of mixed materials when manufacturing a material that emits a spectrum that matches or approximates the corresponding spectrum is also presented, it becomes possible to provide accurate manufacturing information when manufacturing a coloring material for providing colors in consideration of color vision diversity.

**Reference Signs List**

1: Information presentation system; 10: Color conversion system; 20: Material selection system; 11: Acquisition unit; 12: Response calculation unit; 13: Spectrum calculation unit; 14: Generation unit; 21: Selection unit; 22: Presentation unit; 202: Memory (storage unit).

**Claims**

1. An information presentation system, comprising:

   an acquisition unit configured to acquire information of a reference spectrum of a reference coloring material serving as a reference;
   a calculation unit configured to calculate, based on the reference spectrum, a corresponding spectrum for causing a subject to produce a response that matches or approximates a response from a color vision system of a reference observer who has visually recognized the reference coloring material;
   a storage unit configured to store information of a plurality of raw material spectra corresponding to each of a plurality of raw coloring materials to be mixed;
   a selection unit configured to use the information of the corresponding spectrum and the information of the plurality of raw material spectra to select a plurality of mixed materials from among the plurality of raw coloring materials, the plurality of mixed materials emitting a spectrum that matches or approximates the corresponding spectrum when mixed; and
   a presentation unit configured to present information identifying the plurality of mixed materials.

2. The information presentation system according to claim 1,

   wherein the storage unit further stores information of an absorption spectrum that is an absorption characteristic of a color corresponding to one or more wavelength absorbing materials to be mixed, and
   the selection unit further uses the information of the absorption spectrum to select the plurality of mixed materials from among the plurality of raw coloring materials and the one or more wavelength absorbing materials.

3. The information presentation system according to claim 1 or 2,

   wherein the acquisition unit further acquires a consideration ratio indicating a degree of change from the reference spectrum to the corresponding spectrum, and
   the calculation unit calculates the corresponding spectrum based on the reference spectrum and the consideration ratio.

4. The information presentation system according to claim 1 or 2,

   wherein the selection unit calculates a mixing ratio of the plurality of mixed materials emitting a spectrum that matches or approximates the reference spectrum when mixed, and
   the presentation unit further presents information of the mixing ratio.

5. An information presentation program that causes a computer to execute:

   an acquisition step of acquiring information of a reference spectrum of a reference coloring material serving as a reference;
   a calculation step of calculating, based on the reference spectrum, a corresponding spectrum for causing a subject to produce a response that matches or approximates a response from a color vision system of a reference observer who has visually recognized the reference coloring material;
   a storage step of storing information of a plurality of raw material spectra corresponding to each of a plurality of raw coloring materials to be mixed;
   a selection step of using the information of the corresponding spectrum and the information of the plurality of raw material spectra to select a plurality of mixed materials from among the plurality of raw coloring materials, the plurality of mixed materials emitting a spectrum that matches or approximates the corresponding spectrum when mixed; and
   a presentation step of presenting information identifying the plurality of mixed materials.

6. An information presentation method, comprising:

   an acquisition step of acquiring information of a reference spectrum of a reference coloring material serving as a reference;
   a calculation step of calculating, based on the reference spectrum, a corresponding spectrum for causing a subject to produce a response that matches or approximates a response from a color vision system of a reference observer who has visually recognized the reference coloring material;

a storage step of storing information of a plurality of raw material spectra corresponding to each of a plurality of raw coloring materials to be mixed;

a selection step of using the information of the corresponding spectrum and the information of the plurality of raw material spectra to select a plurality of mixed materials from among the plurality of raw coloring materials, the plurality of mixed materials emitting a spectrum that matches or approximates the corresponding spectrum when mixed; and

a presentation step of presenting information identifying the plurality of mixed materials.

**Fig.1**

EP 4 761 229 A1

# Fig.2

## *Fig.3*

*Fig.4*

S1

```
┌─────────────┐
│    START    │
└─────────────┘
```

ACQUIRE REFERENCE SPECTRUM,
SUBJECT MODEL, AND CONSIDERATION RATIO — S11

CALCULATE REFERENCE RESPONSE BASED ON
REFERENCE SPECTRUM AND REFERENCE MODEL — S12

CALCULATE CONVERSION SPECTRUM BASED ON
REFERENCE SPECTRUM, SUBJECT MODEL,
AND REFERENCE RESPONSE — S13

GENERATE CORRESPONDING SPECTRUM BASED
ON REFERENCE SPECTRUM, CONVERSION
SPECTRUM,AND CONSIDERATION RATIO — S14

ACQUIRE MIXED MATERIAL INFORMATION BASED
ON CORRESPONDING SPECTRUM, RAW MATERIAL
SPECTRA, AND ABSORPTION SPECTRA — S15

PRESENT MIXED MATERIAL INFORMATION — S16

```
┌─────────────┐
│     END     │
└─────────────┘
```

## INTERNATIONAL SEARCH REPORT

| International application No. |
|---|
| **PCT/JP2024/030786** |

**A. CLASSIFICATION OF SUBJECT MATTER**

*H04N 1/46*(2006.01)i; *G06T 1/00*(2006.01)i
FI: H04N1/46; G06T1/00 510

According to International Patent Classification (IPC) or to both national classification and IPC

**B. FIELDS SEARCHED**

Minimum documentation searched (classification system followed by classification symbols)

H04N1/46; G06T1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-292071 A (DAINIPPON INK & CHEMICALS INC.) 20 October 2005 (2005-10-20) fig. 3-5 | 1-6 |
| A | JP 2003-337848 A (DAINIPPON INK & CHEMICALS INC.) 28 November 2003 (2003-11-28) fig. 2-3, 7 | 1-6 |
| A | JP 2007-314772 A (KANSAI PAINT CO., LTD.) 06 December 2007 (2007-12-06) fig. 1-2 | 1-6 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 November 2024** | **19 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

| International application No. |
|---|
| **PCT/JP2024/030786** |

| Patent document cited in search report | | | Publication date (day/month/year) | Patent family member(s) | | | Publication date (day/month/year) |
|---|---|---|---|---|---|---|---|
| JP | 2005-292071 | A | 20 October 2005 | (Family: none) | | | |
| JP | 2003-337848 | A | 28 November 2003 | US fig. 2-3, 7 | 2003/0216972 | A1 | |
| | | | | EP | 1363220 | A2 | |
| | | | | CN | 1458626 | A | |
| | | | | KR 10-2003-0089485 | | A | |
| JP | 2007-314772 | A | 06 December 2007 | CN fig. 1-2 | 101081385 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5924289 B
- JP 2009161372 A